(19) **Europäisches Patentamt / European Patent Office / Office européen des brevets**

(11) **EP 3 750 038 B1**

(12) **FASCICULE DE BREVET EUROPEEN**

(45) Date de publication et mention de la délivrance du brevet:
**27.03.2024 Bulletin 2024/13**

(51) Classification Internationale des Brevets (IPC):
*G06F 3/041* (2006.01)    *G06F 3/044* (2006.01)

(52) Classification Coopérative des Brevets (CPC):
**G06F 3/041; G06F 3/044**

(21) Numéro de dépôt: **19710034.0**

(22) Date de dépôt: **06.02.2019**

(86) Numéro de dépôt international:
**PCT/FR2019/050262**

(87) Numéro de publication internationale:
**WO 2019/155159 (15.08.2019 Gazette 2019/33)**

(54) **DISPOSITIF DE DETECTION TACTILE AVEC INTERFACE TACTILE EN MATERIAU COMPOSITE**

BERÜHRUNGSDETEKTIONSVORRICHTUNG MIT AUS VERBUNDSTOFFMATERIAL HERGESTELLTER BERÜHRUNGSSCHNITTSTELLE

TOUCH DETECTION DEVICE WITH TOUCH INTERFACE MADE OF COMPOSITE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **09.02.2018 FR 1851089**

(43) Date de publication de la demande:
**16.12.2020 Bulletin 2020/51**

(73) Titulaire: **SAS Woodoo**
**75001 Paris (FR)**

(72) Inventeurs:
• **THEVENIN, Raphaële**
**75018 PARIS (FR)**
• **BOITOUZET, Timothée**
**75001 Paris (FR)**

(74) Mandataire: **Santarelli**
**Tour Trinity**
**1 bis Esplanade de la Défense**
**92035 Paris La Défense Cedex (FR)**

(56) Documents cités:
**EP-A1- 3 047 656    EP-B1- 3 047 656**
**WO-A1-2017/098149**

• **Dan Torres: "Why knock on wood when touch will do? - MSP Low-Power Plays - Blogs - TI E2E Community", , 25 mai 2017 (2017-05-25), XP055501877, Extrait de l'Internet: URL:https://e2e.ti.com/blogs_/b/msp430blog /archive/2017/05/25/why-knock-on-wood-when -touch-will-do# [extrait le 2018-08-23]**
• **Anonymous: "Panneau de fibres à densité moyenne - Wikipédia", , 7 December 2017 (2017-12-07), XP55937227, Retrieved from the Internet: URL:https://fr.wikipedia.org/w/index.php?t itle=Panneau_de_fibres_à_densité_moyenne&o ldid=143286456 [retrieved on 2022-06-30]**

EP 3 750 038 B1

**Description**

La présente invention concerne un dispositif de détection tactile comprenant une interface tactile définie par la revendication 1, un écran tactile défini par la revendication 7, comprenant le dispositif de détection tactile et un dispositif d'affichage, ainsi qu'un véhicule défini par la revendication 8, comprenant le dispositif de détection tactile.

De manière générale, la présente invention concerne le domaine des dispositifs de détection tactile.

La présente invention trouve notamment son application, de manière non limitative, dans le domaine des produits de luxe, des appareils électroniques (téléphones portables, tablettes, hi-fi, télévisions, drones), de l'horlogerie, de l'ameublement, et plus particulièrement dans le domaine des véhicules automobiles pour équiper l'habitacle. Dans l'habitacle, un dispositif de détection tactile peut permettre de réaliser les zones de commandes situées au niveau du tableau de bord, des portières de véhicules, du volant ou de la console centrale entre les sièges avant d'un véhicule automobile. Ces zones de commande comprennent des surfaces dites surfaces intelligentes, également connues sous le terme anglo-saxon « smart surfaces ».

ETAT DE LA TECHNIQUE

Une solution connue est un dispositif de détection tactile avec une interface tactile en bois naturel décrite, en particulier, dans la demande de brevet WO 2016/138901.

Une autre solution connue est une interface tactile capacitive diélectrique en bois et un haut-parleur ayant cette dernière, dans la demande EP 3047656 A1.

Cependant, l'usage du bois naturel en tant qu'interface tactile présente de nombreux inconvénients.

Le bois est notamment sensible aux variations de température et d'humidité. L'air présent dans les cavités du bois peut se charger en humidité et modifier la conductivité électrique du bois et la cellulose peut se charger en humidité et modifier les caractéristiques dimensionnelles du bois. Ainsi, le bois ne peut être utilisé que dans un nombre limité d'environnements.

En effet, le bois se détériore lorsqu'il est utilisé dans un environnement humide et/ou lorsque les variations de température sont importantes. Le bois est également sensible aux attaques d'insectes et à la prolifération de champignons. Les propriétés diélectriques du bois sont perturbées par l'humidité. Ainsi, l'interface tactile en bois ne peut être utilisée qu'en intérieur ou dans un environnement protégé des variations de température et d'humidité.

La présente invention vise à proposer un dispositif de détection tactile avec une interface tactile moins sensible aux variations de température et d'humidité pour un usage aussi bien en intérieur qu'en extérieur.

Une telle solution présente de nombreux avantages et notamment permet de rendre une interface tactile en matériau ligno-cellulosique moins sensible aux variations de température et d'humidité grâce à l'imprégnation d'une résine dans le matériau ligno-cellulosique.

En particulier, la résine remplace au moins en partie l'air présent dans le matériau ligno-cellulosique. Autrement dit, la résine remplit les cavités présentes dans le matériau ligno-cellulosique. On parle d'une imprégnation à coeur du matériau ligno-cellulosique. La résine permet d'améliorer la stabilité des propriétés diélectriques de l'interface tactile. Ainsi, l'interface tactile peut convenir pour un usage aussi bien en extérieur que pour un usage en intérieur.

Dans un mode de réalisation avantageux, l'interface tactile a un coefficient de transmission lumineuse d'au moins 5%.

Le coefficient de transmission lumineuse traduit la quantité de lumière traversant un corps laissant passer la lumière. Autrement dit, le coefficient de transmission lumineuse traduit le caractère translucide voire transparent de l'interface tactile. Ici, le coefficient de transmission lumineuse d'au moins 5% signifie que l'interface tactile est au moins translucide. Ainsi, l'utilisateur voit à travers l'interface tactile et peut interagir avec des commandes affichées sous le dispositif de détection tactile.

Dans un autre mode de réalisation avantageux, la résine a un indice de réfraction sensiblement égal à celui du matériau ligno-cellulosique.

Lorsque les indices de réfraction de la résine et du matériau ligno-cellulosique sont proches, c'est-à-dire identiques ou quasi-identiques, la lumière passe à travers l'interface tactile en étant peu ou pas déviée. Autrement dit, l'interface tactile comprenant de la résine et du matériau ligno-cellulosique est d'autant plus translucide, voire transparente que les indices de réfraction sont proches.

Par ailleurs, lorsque les indices de réfraction de la résine et du matériau ligno-cellulosique sont proches, la lumière passe à travers l'interface tactile en étant peu ou pas diffusée.

Le phénomène de brouillard de transmission, communément désigné par le terme anglo-saxon « transmission haze » est réduit.

Autrement dit, l'interface tactile comprenant de la résine et du matériau ligno-cellulosique permet d'éviter l'atténuation de l'intensité lumineuse lors du passage de la lumière à travers l'interface tactile.

De manière avantageuse, l'indice de réfraction de la résine pourra être choisi dans un intervalle compris entre 1.35 et 1.70.

Dans un mode de réalisation avantageux, le matériau ligno-cellulosique est du bois comprenant de la lignine et un réseau de cellulose et d'hémicellulose.

Autrement dit, le matériau ligno-cellulosique peut être du bois dans lequel le réseau de cellulose et d'hémicellulose est conservé, même après traitement, et dans lequel une proportion plus ou moins importante de lignine est conservée.

Le bois présente un aspect spécifique et des propriétés mécaniques particulières. Ainsi, l'interface tactile peut préserver les propriétés mécaniques du bois ainsi que son aspect spécifique.

A titre d'exemple, le matériau ligno-cellulosique de l'interface tactile est un bois délignifié. La fraction de lignine retirée est comprise entre 40% et 90% en poids de la lignine présente dans le bois.

Une interface tactile ayant des propriétés mécaniques, conductrices et de translucidité variables peut être obtenue en faisant varier notamment la fraction de lignine retirée. Selon l'application retenue, des propriétés de flexibilité, de conductivité et de translucidité peuvent être privilégiées pour l'interface tactile.

En pratique, le matériau ligno-cellulosique est une coupe longitudinale ou une coupe transversale d'un tronc de bois.

Selon la coupe choisie, les propriétés de conductivité et l'aspect visuel de l'interface tactile peuvent être définis.

Dans un autre mode de réalisation avantageux, la résine est hydrophobe.

La résine hydrophobe interagit peu ou pas avec l'eau. Autrement dit, la résine absorbe peu d'eau. Ainsi, le matériau composite formant l'interface tactile est plus stable vis-à-vis de l'humidité tout en conservant ses propriétés mécaniques et diélectriques.

Dans un autre mode de réalisation avantageux, l'interface tactile a une épaisseur comprise entre 0.4mm et 30mm.

L'épaisseur spécifique de l'interface tactile permet de fournir une interface tactile présentant des caractéristiques mécaniques spécifiques. Ainsi, l'interface tactile peut être plus ou moins flexible et/ou plus ou moins résistante mécaniquement.

Dans un autre mode de réalisation avantageux, la résine comprend des particules électriquement conductrices.

Pour une épaisseur d'interface tactile donnée, les particules électriquement conductrices ajoutées dans la résine permettent d'augmenter la conductivité de l'interface tactile. Ainsi, il est possible d'augmenter l'épaisseur de l'interface tactile tout en conservant des propriétés de détection tactile.

Selon un deuxième aspect, l'invention concerne un écran tactile. L'écran tactile comprend un dispositif d'affichage et un dispositif de détection tactile, l'interface tactile ayant un coefficient de transmission lumineuse au moins égal à 5%.

Selon un troisième aspect, l'invention concerne un véhicule automobile. Le véhicule automobile comprend un dispositif de détection tactile et/ou un écran tactile selon l'invention.

BREVE DESCRIPTION DES DESSINS

D'autres particularités et avantages de l'invention apparaîtront encore dans la description ci-après.

Aux dessins annexés, donnés à titre d'exemples non limitatifs :

- la figure 1a est une vue schématique en perspective d'une interface tactile d'un dispositif de détection tactile conforme à un mode de réalisation de l'invention ;
- la figure 1b est une vue schématique de l'interface tactile représentée en figure 1a selon le plan de coupe A-A ;
- la figure 2 est une vue en perspective d'un tronc de bois comportant plusieurs plans de coupe ;
- la figure 3 est une vue schématique éclatée illustrant les composants d'un exemple d'écran tactile selon un mode de réalisation de l'invention ; et
- la figure 4 est une représentation schématique d'un exemple d'habitacle de véhicule automobile selon un mode de réalisation de l'invention.

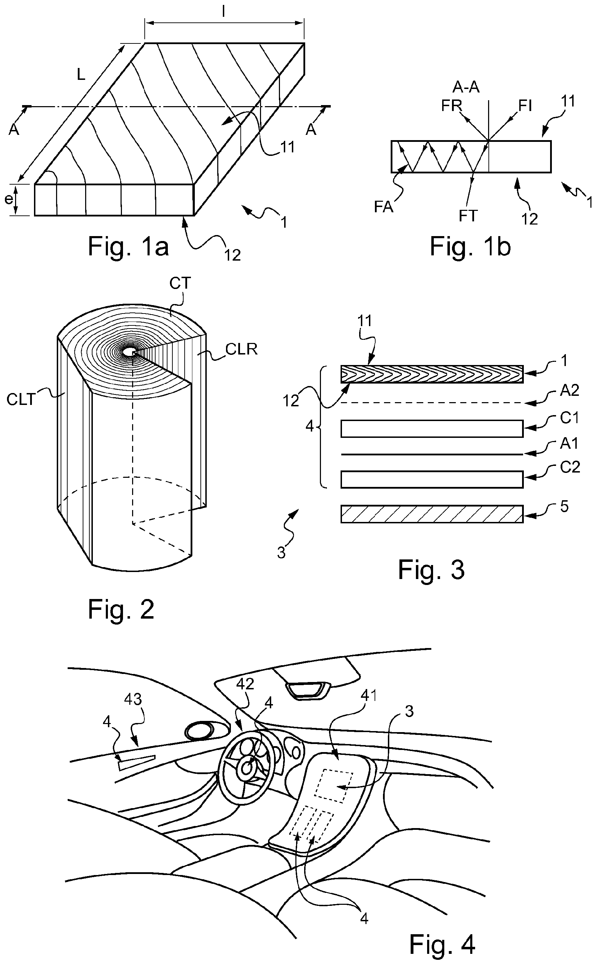

La figure 1a représente une vue schématique en perspective d'une interface tactile d'un dispositif de détection tactile.

Ici, l'interface tactile 1 a la forme d'un hexaèdre. Toutefois, l'interface tactile 1 peut avoir d'autres formes particulières, telles qu'une forme ayant pour base un triangle, un cercle, un carré ou un polygone. Ici, l'interface tactile 1 comporte typiquement trois dimensions : une longueur L, une largeur l et une épaisseur e.

Dans un mode de réalisation avantageux, l'épaisseur e est la dimension la plus petite. L'épaisseur e est comprise entre 0.4 mm et 30mm.

Pour une épaisseur e comprise entre 0.4mm et 2mm, l'interface tactile 1 peut être flexible ou être rendue flexible. Pour une épaisseur e comprise entre 2 mm et 30 mm, l'interface tactile 1 présente une plus grande rigidité.

Ainsi, une épaisseur e spécifique donne à l'interface tactile 1 des propriétés mécaniques spécifiques.

De manière générale, l'interface tactile 1 est formée d'un matériau composite. Le matériau composite est un matériau ligno-cellulosique imprégné d'une résine.

Un procédé d'imprégnation du matériau composite est connu de l'homme du métier et est notamment décrit dans le document WO 2017/098149. Le procédé décrit dans le document cité correspond principalement à une étape de délignification, appelée trempage, suivie d'une étape d'imprégnation appelée remplissage par un composé de remplissage.

Bien entendu, d'autres modes d'imprégnation peuvent être utilisés pour réaliser le matériau composite.

La fraction de résine est comprise entre 30 % (fraction de résine minimum) et 80% (fraction de résine maximum) en masse par rapport à la masse totale de matériau composite.

Deux exemples de calcul de la fraction de résine sont présentés ci-dessous. Le premier exemple concerne un bois non délignifié. Le deuxième exemple concerne un bois en tout ou partie délignifié. Des applications numériques illustrent ces calculs.

Selon un premier exemple, pour un bois non délignifié, la fraction de résine en masse, notée f(résine), s'exprime littéralement :

$$f(\text{résine}) = \frac{m(\text{résine})}{m(\text{bois} + \text{résine})}$$

en notant :

m(résine) : masse de résine imprégnée

m(bois + résine) : masse de bois et de résine (matériau composite)

Autrement dit, en explicitant la définition de la masse de résine imprégnée dans le bois et de la masse de bois et de résine, la fraction de résine en masse s'exprime littéralement :

$$\frac{f(\text{résine,vol}) \times V(\text{bois}) \times \mu(\text{résine})}{V(\text{bois}) \times \mu(\text{bois}) + f(\text{résine,vol}) \times V(\text{bois}) \times \mu(\text{résine})} : (1)$$

en notant :

f(résine, vol) : fraction volumique d'air dans le bois (ou fraction volumique de résine remplissant tous les espaces vides naturellement présents dans le bois) V(bois) : volume du bois

$\mu$(bois) : masse volumique du bois

$\mu$(résine) : masse volumique de résine

Ou encore, en simplifiant l'équation (1) par V(bois), la fraction de résine en masse s'exprime :

$$\frac{f(\text{résine, vol}) \times \mu(\text{résine})}{\mu(\text{bois}) + f(\text{résine, vol}) \times \mu(\text{résine})}$$

A titre d'exemple non limitatif, la fraction de résine en masse peut être calculée pour un bois de feuillus (à un taux d'humidité relative de 15%) non délignifié de densité égale à 0,7 (équivalent à 30% d'air en volume). Ici, le bois de feuillus est imprégné par exemple d'une résine de polyméthacrylate de méthyle (PMMA) ayant une masse volumique de 1,18 g/m$^3$.

La fraction de résine en masse est de :

$$f(\text{bois de feuillus, PMMA}) = \frac{30\% \times 1.18 \times 10^{\wedge}3}{0.7 \times 10^{\wedge}3 + 30\% \times 1.18 \times 10^{\wedge}3}$$

Soit :

$$f(\text{bois de feuillus, PMMA}) = 0{,}34$$

Ainsi, au maximum 34% de résine en masse peut imprégner ce bois de feuillus (à un taux d'humidité relative de 15%) non délignifié de densité égale à 0,7 lorsque tous les espaces présents naturellement dans la structure ligno-cellulosique du bois sont remplis par de la résine.

Selon un deuxième exemple, il s'agit d'un bois en tout ou partie délignifié,

Dans cet exemple, les espaces vides présents naturellement dans la structure ligno-cellulosique du bois et les espaces vides obtenus par délignification partielle ou totale du bois sont remplis par de la résine.

La fraction de résine en masse s'exprime alors :

$$\frac{\left[\,f(\text{délignifié}) \times f(\text{lignine bois})\right) + f(\text{air})\,\right] \times \mu(\text{résine}) \times V(\text{bois})}{\mu(\text{bois}) \times V(\text{bois}) \;+\; \left[\,f(\text{délignifié}) \times f(\text{lignine bois})\right) + f(\text{air})\,\right] \times \mu(\text{résine}) \times V(\text{bois})}$$

en notant :

f(délignifié) : taux de délignification
f(lignine bois) : fraction volumique de lignine dans le bois
f(air) : fraction volumique d'air dans le bois
V(bois) : volume du bois
$\mu$(bois) : masse volumique du bois
$\mu$(résine) : masse volumique de résine

Ainsi, à titre d'application non limitative, la fraction de résine en masse peut être calculée pour un bois de résineux de densité égale à 0,5 (à un taux d'humidité relative de 15%), de fraction volumique en lignine de 30%, avec un taux de délignification de 90%, et imprégné de PMMA de masse volumique de 1,18g/m$^3$.

La fraction de résine en masse s'exprime :

$$f(\text{bois de résineux, PMMA}) = \frac{[90\% \times 30\% + 50\%\,] \times 1{.}18 \times 10\char`\^3}{0{.}5 \times 10\char`\^3 + [90\% \times 30\% + 50\%\,] \times 1{.}18 \times 10\char`\^3}$$

Soit :

$$f(\text{bois de résineux, PMMA}) = 0{,}64$$

Ainsi, la fraction maximum de résine en masse dans cet exemple est 64%.

Ces exemples de réalisation ne sont nullement limitatifs.

Ainsi, la fraction en masse de résine imprégnée dans le matériau composite dépend notamment de la nature du bois (résineux, exotique, feuillus), et donc de la densité ou masse volumique du bois, de la délignification partielle ou totale du bois et du type de résine imprégnée dans le bois.

La résine est typiquement un polymère thermodurcissable ou un polymère thermoplastique, tel que décrit dans le document WO 2017/098149 dont le contenu est incorporé par référence à la présente description. La résine peut également être un élastomère.

De manière avantageuse, la résine est un polymère ou co-polymère, ou un monomère associé à un amorceur de polymérisation radicalaire dans le cas d'un thermoplastique, ou d'un réticulant dans le cas d'un thermodurcissable.

Les polymères ou co-polymères thermoplastiques peuvent être choisis parmi les familles suivantes : la famille des fluoropolymères, des polystyrènes, des polycarbonates ou des polyamides, ou toute autre famille connue de l'homme du métier.

Les monomères thermoplastiques peuvent être choisis parmi les monomères pétro-sourcés de type métacrylates (d'éthyle, de méthyle, de butyle), ou des monomères biosourcés, associés à des amorceurs du type azoisobutyronitrile, peroxydes, ou tout amorceur connu de l'homme du métier.

De manière avantageuse, les monomères thermodurcissables seront choisis parmi les monomères pétrosourcés Epoxy ou phénoliques, ou toute autre résine connue de l'homme du métier, ou des monomères biosourcés, associés à des réticulants adaptés.

La résine présente l'avantage de rendre le matériau composite, formé à partir d'un matériau ligno-cellulosique, stable quelles que soient les conditions de température et d'humidité. Ainsi, l'interface tactile peut convenir aussi bien pour un usage en extérieur que pour un usage en intérieur.

La résine peut être hydrophobe. Ainsi, le matériau composite réagit encore moins avec l'humidité de l'environnement.

Ainsi, l'interface tactile présente des caractéristiques diélectriques plus stables.

Dans un mode de réalisation avantageux, le matériau ligno-cellulosique est du bois comprenant de la lignine et un réseau, le réseau étant composé de cellulose et d'hémicellulose.

Ainsi, l'interface tactile 1 présente à la fois un visuel proche du bois naturel et des caractéristiques mécaniques au moins similaires à celles procurées par du bois.

Plus précisément, toujours en référence au document WO 2017/098149, des mesures comparatives de flexion, de traction axiale et de compression axiale d'un échantillon d'essence de sapin traité selon le procédé d'imprégnation du matériau composite cité dans le document et d'un échantillon d'essence de sapin naturel ont été réalisées.

Les mesures de flexion montrent que l'échantillon d'essence de sapin traité a un effort de flexion accrue de 200% et une rupture plus progressive que l'échantillon d'essence de sapin naturel. Les mesures de compression axiale montrent que l'échantillon d'essence de sapin traité a une résistance à un effort de compression axiale accrue de 170% et une rupture plus progressive que l'échantillon d'essence de sapin naturel. Les mesures de traction axiale montrent que l'échantillon d'essence de sapin traité a une déformation plastique d'une valeur sensiblement identique à celle de l'échantillon d'essence de sapin naturel.

Ainsi, dans un mode de réalisation avantageux, le matériau ligno-cellulosique obtenu par le procédé décrit dans le document WO 2017/098149, permet d'obtenir des caractéristiques mécaniques supérieures ou au moins équivalentes à celles d'un matériau ligno-cellulosique type bois non traité.

En outre, dans un mode de réalisation avantageux, le bois est choisi parmi des essences spécifiques. En effet, selon l'essence choisie, le bois a un aspect et des caractéristiques mécaniques particulières. Ainsi, l'interface tactile 1 a aussi un aspect et des caractéristiques mécaniques particulières.

Pour mémoire et en référence à la figure 2, un tronc de bois 2 peut être coupé suivant des plans différents.

Lorsque le tronc de bois 2 est coupé perpendiculairement à la direction formée par le tronc de bois 2, on parle d'une coupe transversale CT.

Lorsque le tronc de bois 2 est coupé dans une direction parallèle à la direction formée par le tronc de bois 2, on parle d'une coupe longitudinale. Il existe deux types de coupes longitudinales : la coupe longitudinale radiale CLR et la coupe longitudinale tangentielle CLT.

On distingue entre une coupe longitudinale radiale CLR qui passe par l'axe longitudinal central ZZ' du tronc de bois et une coupe longitudinale tangentielle CLT qui ne passe pas par l'axe longitudinal central ZZ' du tronc de bois.

Dans un mode de réalisation avantageux, le matériau ligno-cellulosique utilisé pour réaliser le matériau composite de l'interface tactile provient d'une coupe longitudinale ou d'une coupe transversale d'un tronc de bois.

Ainsi, le matériau ligno-cellulosique est un bois avec des propriétés mécaniques globalement homogènes.

Dans un mode de réalisation avantageux, l'épaisseur du matériau ligno-cellulosique peut correspondre à des valeurs standard de coupe dans l'industrie du bois en Europe, par exemple 0.6mm, 0.9mm, 1.2mm, 2.5mm, 6mm, 18mm ou 27mm.

L'interface tactile 1 est réalisée à partir d'une telle coupe de bois, d'épaisseur standard par exemple. Toutefois, l'épaisseur e de l'interface tactile peut être légèrement différente de celle du matériau ligno-cellulosique utilisé, suite à son imprégnation par une résine.

La figure 1b représente une vue schématique de l'interface tactile 1 sur laquelle arrive un faisceau lumineux. L'interface tactile 1 est choisie ici apte à laisser passer au moins un certain pourcentage de la lumière incidente. Ainsi, lorsqu'un faisceau lumineux incident FI entre en contact avec une face supérieure 11 de l'interface tactile 1, le faisceau lumineux est dévié. Un faisceau lumineux réfracté FR et un faisceau lumineux absorbé FA sont formés. Lorsque le faisceau lumineux absorbé FA atteint la face inférieure 12 de l'interface tactile 1, un faisceau lumineux transmis FT est formé. Le faisceau lumineux absorbé FA peut de nouveau être réfracté sur la face inférieure 12 de l'interface tactile 1.

Le coefficient de transmission lumineuse correspond à la quantité de lumière passant à travers l'interface tactile, c'est-à-dire au faisceau lumineux traversant FT. Plus précisément, la mesure est effectuée par comparaison entre la valeur de l'éclairage ambiant et la valeur du flux de transmission lumineuse. Les mesures sont réalisées en lux.

On considère qu'un corps est translucide lorsque le coefficient de transmission lumineuse est compris entre 5% et 90%. On considère qu'un corps est transparent lorsque le coefficient de transmission lumineuse est supérieur à 90%. On notera que ces valeurs sont des moyennes.

Par exemple, dans le cas d'une interface tactile 1 obtenue à partir d'un bois délignifié, le coefficient de transmission lumineuse peut ne pas être le même dans toutes les directions. En effet, suivant les zones de l'interface tactile 1, le bois est plus ou moins délignifié et laisse plus ou moins bien passer la lumière.

Pour le protocole de mesure du coefficient de transmission lumineuse, on se reportera, par exemple, au document WO 2017/098149.

Par ailleurs, toujours en référence au document WO 2017/098149, selon le matériau ligno-cellulosique choisi, l'interface tactile 1 peut avoir un rendu optique très variable.

En effet, dans le cas où le matériau ligno-cellulosique est du bois, le réseau de cellulose et d'hémicellulose est caractéristique de chaque essence. Ainsi, l'interface tactile 1 comprenant du matériau ligno-cellulosique peut être plus ou moins translucide, voire transparente, avec des teintes et des géométries de grains différentes.

Par exemple, toujours dans le cas d'un matériau ligno-cellulosique type bois, selon les essences, les zones de bois d'été et de bois de printemps peuvent ne pas avoir la même nature ou ne pas être différenciées. Il en va de même pour l'aubier et le duramen pour certaines essences.

Dans le cas d'une coupe transversale, il est ainsi possible, pour certains bois, notamment ceux présentant des cernes de croissances annuelles (alternance de bois d'été et de bois de printemps), que l'une des parties, souvent le bois d'été, soit moins prompte à subir le traitement, par exemple l'étape de trempage, laissant ainsi apparaitre après traitement des zones plus ou moins translucides ou transparentes, voire opaques.

Il est aussi possible que la réactivité de la structure pendant l'étape de remplissage soit sensiblement uniforme rendant le matériau uniformément translucide ou transparent.

Autrement dit, dans le cas d'un matériau ligno-cellulosique type bois, le choix de l'essence a une influence sur les caractéristiques optiques du matériau ligno-cellulosique.

Ainsi, un choix pertinent de l'essence et de la coupe permet d'optimiser le caractère translucide ou transparent de l'interface tactile 1.

Dans un mode de réalisation avantageux, la résine est choisie pour obtenir une interface tactile 1 présentant un coefficient de transmission lumineuse d'au moins 5%.

Un coefficient de transmission lumineuse d'au moins 5% permet à l'utilisateur de voir à travers l'interface tactile 1.

Dans un mode de réalisation avantageux, la résine est choisie avec un indice de réfraction sensiblement identique à celui du matériau ligno-cellulosique à imprégner. La résine pourra être choisie avec un indice de réfraction compris entre 1.35 et 1.70.

Autrement dit, la résine est choisie telle qu'elle possède la même densité optique que celle de la cellulose.

En effet, le matériau ligno-cellulosique est principalement composé de cellulose et l'hémicellulose a une densité optique proche de celle de la cellulose. Ainsi, pour obtenir un matériau ligno-cellulosique translucide, voire transparent, la résine sera choisie avec la même densité optique que celle de la cellulose.

Plus précisément, toujours en référence au document WO 2017/098149, l'indice de réfraction du polymère ainsi obtenu est typiquement compris dans un intervalle de 1,35 à 1,70 et est souvent pris autour de 1,47, 1,53, 1,56 ou 1,59, avec une variation possible autour de ces valeurs de l'ordre de 10%.

Il peut également être, dans un mode de réalisation différent, typiquement compris dans un intervalle de 1,40 à 1,60, par exemple d'environ 1,47.

Ainsi, un choix pertinent de la résine permet d'optimiser le caractère translucide ou transparent de l'interface tactile 1.

Par ailleurs, un choix pertinent de l'essence de bois, de la coupe de bois et de la résine permet de limiter la diffraction et la réfraction des rayons incidents sur l'interface tactile 1, de telle sorte que les contours du signal lumineux transmis soient nets.

En comparaison, le bois naturel non traité diffuse la lumière. Plus précisément, un halo lumineux se forme lors du passage de la lumière dans l'épaisseur du bois. Ainsi, une bonne lecture au travers de son épaisseur est rendue difficile.

La propriété translucide ou transparente permet une utilisation de l'interface tactile 1 comme interface homme-machine sans nécessité de gravure. Ainsi, l'interface tactile 1, ici présentée, pourra être utilisée dans la fabrication d'un affichage nocturne de confort (« black panel » en terminologie anglo-saxonne) dans le secteur automobile. En effet, l'interface tactile 1 étant translucide ou transparente, il n'est pas nécessaire de graver la surface de l'interface tactile 1 pour indiquer les différentes commandes possibles.

Les commandes sont par exemple affichées au niveau d'un dispositif d'affichage 5, décrit ci-après dans la description.

Dans un mode de réalisation avantageux, l'interface tactile 1 est en contact sur sa face inférieure 12 avec un filtre à opacité contrôlée (non illustré).

Plus précisément, le filtre à opacité contrôlée est relié à des moyens d'alimentation électrique permettant de contrôler son opacité.

Lorsque le filtre à opacité contrôlée est hors tension, il est opaque. La lumière ne peut pas passer au travers. Lorsque le filtre à opacité contrôlée est sous tension, il est transparent ou translucide. La lumière peut passer au travers du filtre, et être ainsi transmise au travers de l'interface tactile 1.

Dans un autre mode de réalisation, la résine est mélangée à des particules électriquement conductrices afin notamment d'améliorer les propriétés conductrices de l'interface tactile 1.

Autrement dit, pour une même épaisseur, une interface tactile 1 comprenant une résine dopée a des propriétés de résistivité électriques sensiblement plus faibles par rapport à une interface tactile 1 comprenant une résine non dopée.

Ainsi, une interface tactile 1 comprenant une résine dopée peut avoir une épaisseur plus importante tout en conservant des propriétés de conductivité adaptées à la détection tactile.

Typiquement, les particules électriquement conductrices sont de l'oxyde d'indium-étain, de l'oxyde d'indium ou des particules de graphite.

Bien entendu, d'autres particules électriquement conductrices peuvent être mélangées à la résine.

Autrement dit, la résine est dopée en particules électriquement conductrices et imprégnée dans la structure du matériau ligno-cellulosique.

Dans le cas d'un matériau ligno-cellulosique type bois présentant une porosité, la résine dopée s'insère dans les cavités du bois.

Ainsi, l'interface tactile 1 présente de meilleures performances de conductivité électrique.

Dans un autre mode de réalisation, l'interface tactile 1 ne comprend pas de résine dopée mais est en contact sur sa face inférieure 12 avec un film tactile ayant des propriétés piézoélectriques ou capacitives.

L'utilisateur conserve ainsi le toucher du bois sur la face supérieure 11 de l'interface tactile 1. L'association d'un film tactile à l'interface tactile 1 améliore les propriétés de détection tactile de l'ensemble ainsi constitué.

En référence à la figure 3, une vue schématique d'un écran tactile 3, selon un mode de réalisation de l'invention, est représenté.

La technologie de détection tactile représentée est du type technologie capacitive. Toutefois, toute autre technologie de détection tactile peut être utilisée. En effet, la technologie résistive, la technologie des ondes de surface, la technologie infra-rouge ou encore la technologie piézo-électrique peuvent être utilisées avec l'interface tactile 1.

Ces différents types de technologie et leurs moyens de mise en oeuvre sont bien connus de l'homme du métier et n'ont pas besoin d'être développés ici.

L'écran tactile 3 comprend un dispositif de détection tactile 4, une face inférieure du dispositif de détection tactile 4 étant en contact avec un dispositif d'affichage 5.

Par exemple, le dispositif d'affichage 5 est un Foled (« Flexible Oled » : Oled flexible).

Ce type de dispositif d'affichage 5 est bien adapté à coopérer avec une interface tactile 1 telle que décrite précédemment, notamment lorsque l'interface tactile 1 présente des propriétés de flexibilité.

De manière générale, le dispositif d'affichage 5 peut être un écran flexible, semi-rigide ou rigide.

Le dispositif d'affichage 5 peut être un dispositif d'affichage de type Oled, de type LCD, de type OTFT, de type OLCD ou de type QLED.

Il peut s'agir d'un dispositif d'affichage à image fixe, du type OLED, qui peut être allumé ou éteint selon la commande tactile.

Dans ce cas, on intercale de préférence entre le dispositif d'affichage 5 et l'interface tactile 1, une couche transparente conductrice découpée pour délimiter les zones actives de l'écran tactile, ainsi qu'une couche isolante entre cette couche conductrice et l'interface tactile 1 afin d'éviter que l'interface tactile 1 ne crée de ponts diélectriques au-dessus des zones actives du dispositif d'affichage 5.

Le dispositif d'affichage 5 peut également être un écran à images animées (objet graphique animé), tel qu'un afficheur de téléphone portable.

Dans un autre mode de réalisation, le dispositif d'affichage 5 est formé d'un système de projection d'images comprenant un projecteur d'images (non illustré). Ici, l'interface tactile 1 est en contact sur sa face inférieure 12 avec un film tactile permettant d'activer le projecteur d'images. La projection des images est réalisée sur la face inférieure 12 de l'interface tactile 1.

La disposition spécifique du film tactile sous l'interface tactile 1 permet de conserver le toucher direct de l'interface tactile 1 par l'utilisateur. Autrement dit, le doigt de l'utilisateur est en contact avec le grain du bois de l'interface tactile 1, et non le film tactile.

Dans un autre mode de réalisation avantageux, le dispositif d'affichage est un textile lumineux, c'est-à-dire un textile auquel a été ajouté un élément électroluminescent. Ce textile lumineux peut être collé contre le dispositif de détection tactile 4.

Dans un mode de réalisation particulier, le textile lumineux peut recouvrir tout ou partie de la face inférieure du dispositif de détection tactile 4.

Ici encore, la disposition spécifique du textile lumineux permet un contact direct avec le bois de l'interface tactile 1.

Le dispositif de détection tactile 4 comprend une interface tactile 1, telle que décrite précédemment. L'interface tactile 1 est dans ce mode de réalisation en contact sur sa face inférieure 12 avec une première couche conductrice C1. La première couche conductrice C1 est en contact sur sa face inférieure avec une couche adhésive A1. La couche adhésive A1 est en contact sur sa face inférieure avec une deuxième couche conductrice C2. La deuxième couche conductrice C2 est complémentaire de la première couche conductrice C1.

Les quatre couches 1, C1, A1, C2 sont empilées et placées sur le dispositif d'affichage 5.

Dans un mode de réalisation alternatif, une couche adhésive supplémentaire A2 est placée entre la face inférieure 12 de l'interface tactile 1 et la face supérieure de la première couche conductrice C1. La couche adhésive supplémentaire A2 permet de maintenir l'interface tactile 1 au reste du dispositif de détection tactile 4. D'autres moyens de fixation de l'interface tactile 1, tel qu'un cadre de support, peuvent être employés.

On notera que le dispositif d'affichage 5 comporte des moyens d'éclairage permettant d'afficher différents éléments sur l'écran tactile 3.

Ainsi, dans un mode de réalisation avantageux, même lorsque l'interface tactile 1 a un coefficient de transmission lumineuse faible, par exemple entre 5% et 30%, il est possible pour l'utilisateur de voir les éléments affichés sur l'écran tactile 3 et d'interagir avec ces éléments.

Dans un mode de réalisation avantageux, une couche diffusante (non illustré) est disposée en contact avec la face inférieure 12 de l'interface tactile 1.

Autrement dit, la couche diffusante n'est pas disposée sur la face supérieure 11 de l'interface tactile 1. Ainsi, l'utilisateur ne touche pas la couche diffusante mais le bois de l'interface tactile 1.

La couche diffusante est apte à diffuser la lumière provenant des moyens d'éclairage du dispositif d'affichage 5.

De manière générale, l'interface tactile 1, décrite précédemment, peut être utilisée dans tout dispositif de détection tactile 4 et écran tactile 3 bien connu de l'homme du métier.

Dans un mode de réalisation avantageux, le dispositif de détection tactile 4 est associé à un système de capteurs et de micro-contrôleurs optiques (non représenté) apte à moduler la couleur de la lumière émise par le dispositif d'affichage 5 en fonction des perturbations lumineuses de l'éclairage ambiant et de la couleur de l'interface tactile 1 pour obtenir une lumière à la sortie de l'interface tactile 1 sensiblement proche de la lumière émise directement en sortie du dispositif d'affichage 5.

Par exemple, lorsque l'essence de bois employé pour l'interface tactile 1 est jaune ou orange, le système de capteurs et de micro-contrôleurs optiques donnera l'ordre aux moyens d'éclairage du dispositif d'affichage 5 d'émettre une lumière bleue, et inversement. On obtient ainsi une lumière visible par l'utilisateur, proche de la lumière émise directement à la sortie du dispositif d'affichage 5 indépendamment de l'essence de bois utilisé.

Par exemple encore, lorsque l'éclairage ambiant est faible, le système de capteurs et de micro-contrôleurs optiques donnera l'ordre aux moyens d'éclairage du dispositif d'affichage 5 d'émettre une lumière plus intense.

De manière générale, le système de capteurs et de micro-contrôleurs a pour but de moduler la couleur et l'intensité lumineuse en fonction des perturbations lumineuses de l'éclairage ambiant et de la couleur de l'essence de bois pour qu'en sortie de l'interface tactile 1 la lumière soit sensiblement identique (intensité, spectre colorimétrique...) à la lumière en sortie du dispositif d'affichage 5.

Dans un mode de réalisation avantageux, le dispositif de détection tactile 4 comprend un dispositif haptique permettant un ressenti tactile (également connues sous le terme anglo-saxon « haptic feedback ») par vibration.

Autrement dit, lorsque l'utilisateur touche le dispositif de détection tactile 4, un retour de force est prévu. Ce retour de force peut être réalisé grâce à des émetteurs d'électrovibrations ou des émetteurs de vibrations ultrasoniques.

En référence à la figure 4, des exemples d'utilisation d'un tel dispositif de détection tactile 4 et d'écran tactile 3 sont représentés dans un habitacle de véhicule automobile.

Dans un mode de réalisation, un dispositif de détection tactile 4 et/ou un écran tactile 3 est intégré à la console centrale 41 entre les sièges avant d'un véhicule automobile. De même un dispositif de détection tactile 4 et/ou un écran tactile 3 est intégré au niveau du volant 42 ou au niveau de l'une des portières 43 du véhicule automobile.

Ainsi, l'utilisateur du véhicule, conducteur ou passager, peut interagir avec les commandes du véhicule grâce à un ensemble multimédia intégré dans la console centrale 41.

Dans l'exemple de réalisation présenté à la figure 4, l'ensemble multimédia intégré dans la console centrale 41 comporte deux dispositifs de détection tactile 4 et un écran tactile 3.

Dans un mode de réalisation avantageux, l'ensemble multimédia comporte seulement un ou plusieurs écrans tactiles 3. L'ensemble multimédia comporte une face uniforme et sans démarcation visible pour l'utilisateur lorsque les moyens d'éclairage de l'écran tactile ne fonctionnent pas.

Autrement dit, l'écran tactile 3 n'est pas visible pour l'utilisateur lorsque les moyens d'éclairage ne fonctionnent pas.

Toujours en référence au mode de réalisation représenté à la figure 4, chaque dispositif de détection tactile 4 comprend des parties tactiles et des parties non tactiles.

Plus précisément, pour un dispositif de détection tactile 4, les parties tactiles correspondent aux parties de l'interface tactile 1 en contact avec une technologie de détection tactile. Il s'agit, par exemple, de touches de commande. Les parties non tactiles sont les parties de l'interface tactile 1 dont la face inférieure 12 n'est pas en contact avec une technologie de détection tactile. Il s'agit, par exemple, des espaces entre les touches de commande.

Bien entendu, l'invention n'est pas limitée aux exemples de réalisation décrits précédemment. La présente invention peut être utilisée dans une grande variété d'utilisations pour le luxe (tels que des bracelets de montre), des éléments de forme (ou design) ou pour des éléments d'électronique grand public (tels que des téléphones, des tablettes numériques, des télévisions).

La présente invention peut aussi être utilisée pour des éléments liés à la mobilité tel que des éléments d'intérieur automobile (tableaux de bords, éléments de portière), dans le domaine nautique (tels que des scooters des mers, des bateaux, des éléments d'intérieurs de yachts ou de jets) ou dans le domaine aéronautique (tels que des drones)

La présente invention peut aussi être utilisée pour des éléments sportifs (tels que des skis), des éléments ou produits de grande consommation (telles que des lunettes ou des protections de téléphone) et des éléments pour la construction.

La présente invention peut aussi être utilisée dans le domaine de la bureautique ou du mobilier, tels qu'une table de bureau avec un écran tactile ou une porte avec des dispositifs de détection tactile permettant d'interagir avec l'utilisateur.

**Revendications**

1. Dispositif de détection tactile, **caractérisé en ce qu'**il comprend une interface tactile (1) en matériau composite comprenant un matériau ligno-cellulosique comportant des cavités et une résine, ledit matériau ligno-cellulosique étant imprégné de ladite résine avec les cavités qui sont remplies par ladite résine, la fraction de résine étant comprise entre 30% et 80% en masse par rapport à la masse totale de matériau composite, ladite interface tactile (1) ayant un coefficient de transmission lumineuse d'au moins 5%, la résine ayant un indice de réfraction sensiblement égal à celui du matériau ligno-cellulosique, ledit indice de réfraction étant compris entre 1.35 et 1.70.

2. Dispositif de détection tactile conforme à la revendication 1, **caractérisé en ce que** ledit matériau ligno-cellulosique est du bois comprenant de la lignine et un réseau de cellulose et d'hémicellulose.

3. Dispositif de détection tactile conforme à la revendication 2, **caractérisé en ce que** ledit bois est délignifié, la fraction de lignine retirée étant comprise entre 40% et 90% en poids de la lignine présente dans ledit bois.

4. Dispositif de détection tactile conforme à l'une des revendications 1 à 3, **caractérisé en ce que** ladite résine est hydrophobe.

5. Dispositif de détection tactile conforme à l'une des revendications 1 à 4, **caractérisé en ce que** ladite interface tactile (1) a une épaisseur (e) comprise entre 0.4mm et 30mm.

6. Dispositif de détection tactile conforme à l'une des revendications 1 à 5, **caractérisé en ce que** ladite résine comprend des particules électriquement conductrices.

7. Ecran tactile, **caractérisé en ce qu'**il comprend un dispositif d'affichage (5) et un dispositif de détection tactile (4) conforme à l'une des revendications 1 à 6, ladite interface tactile (1) ayant un coefficient de transmission lumineuse au moins égal à 5%.

8. Véhicule automobile, **caractérisé en ce qu'**il comprend un dispositif de détection tactile (4) conforme à l'une des revendications 1 à 6 et/ou un écran tactile (3) conforme à la revendication 7.

**Patentansprüche**

1. Berührungserkennungsvorrichtung, **dadurch gekennzeichnet, dass** sie eine Berührungsschnittstelle (1) aus Verbundmaterial umfasst, das ein lignocellulosehaltiges Material, das Hohlräume umfasst, und ein Harz umfasst, wobei das lignocellulosehaltige Material mit dem Harz getränkt ist, wobei die Hohlräume mit dem Harz gefüllt sind, wobei der Harzanteil, auf die Gesamtmasse des Verbundmaterials bezogen, im Bereich zwischen 30 Masse-% und 80 Masse-% liegt, wobei die Berührungsschnittstelle (1) einen Lichtdurchlässigkeitskoeffizienten von mindestens 5 % aufweist, wobei das Harz einen Brechungsindex von im Wesentlichen gleich demjenigen des lignocellulosehaltigen Materials aufweist, wobei der Brechungsindex im Bereich zwischen 1,35 und 1,70 liegt.

2. Berührungserkennungsvorrichtung nach Anspruch 1, **dadurch gekennzeichnet, dass** das lignocellulosehaltige Material Holz ist, das Lignin und ein Netz aus Cellulose und Hemicellulose umfasst.

3. Berührungserkennungsvorrichtung nach Anspruch 2, **dadurch gekennzeichnet, dass** das Holz delignifiziert ist, wobei der entfernte Ligninanteil im Bereich zwischen 40 Gewichts-% und 90 Gewichts-% des im Holz vorhandenen Lignins liegt.

4. Berührungserkennungsvorrichtung nach einem der Ansprüche 1 bis 3, **dadurch gekennzeichnet, dass** das Harz hydrophob ist.

5. Berührungserkennungsvorrichtung nach einem der Ansprüche 1 bis 4, **dadurch gekennzeichnet, dass** die Berührungsschnittstelle (1) eine Dicke (e) im Bereich zwischen 0,4 mm und 30 mm aufweist.

6. Berührungserkennungsvorrichtung nach einem der Ansprüche 1 bis 5, **dadurch gekennzeichnet, dass** das Harz elektrisch leitfähige Partikel umfasst.

7. Berührungsbildschirm, **dadurch gekennzeichnet, dass** er eine Anzeigevorrichtung (5) und eine Berührungserkennungsvorrichtung (4) nach einem der Ansprüche 1 bis 6 umfasst, wobei die Berührungsschnittstelle (1) einen Lichtdurchlässigkeitskoeffizienten von mindestens gleich 5 % aufweist.

8. Kraftfahrzeug, **dadurch gekennzeichnet, dass** es eine Berührungserkennungsvorrichtung (4) nach einem der Ansprüche 1 bis 6 und/oder einen Berührungsbildschirm (3) nach Anspruch 7 umfasst.

**Claims**

1. Touch detection device , **characterized in that** it comprises a touch interface (1) of composite material comprising a lignocellulosic material comprising cavities and a resin, said lignocellulosic material being impregnated with said resin with cavities being filled by said resin, the resin fraction being comprised between 30% and 80% by mass of the total mass of composite material, said touch interface (1) having a light transmission coefficient of at least 5%, said resin having a refractive index substantially equal to that of said lignocellulosic material, said resin has a refractive index comprised between 1.35 and 1.70.

2. Touch detection device according to claim 1, **characterized in that** said lignocellulosic material is wood comprising lignin and a network of cellulose and hemicellulose.

3. Touch detection device according to claim 2, **characterized in that** said wood is delignified, the fraction of removed lignin being comprised between 40% and 90% by weight of the lignin present in said wood.

4. Touch detection device according to one of claims 1 to 3, **characterized in that** said resin is hydrophobic.

5. Touch detection device according to one of claims 1 to 4, **characterized in that** said touch interface (1) has a thickness (e) comprised between 0.4 mm and 30 mm.

6. Touch detection device according to one of claims 1 to 5, **characterized in that** said resin comprises electrically conducting particles.

7. Touch screen, **characterized in that** it comprises a display device (5) and a touch detection device (4) in accordance with one of claims 1 to 6, said touch interface (1) having a light transmission coefficient at least equal to 5%.

8. An automotive vehicle, **characterized in that** it comprises a touch detection device (4) in accordance with one of claims 1 to 6 and/or a display screen (3) in accordance with claim 7.

Fig. 1a

Fig. 1b

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016138901 A
- EP 3047656 A1

- WO 2017098149 A